# EUROPEAN PATENT SPECIFICATION

(11) **EP 4 328 786 B1**
(45) Date of publication and mention of the grant of the patent: **04.03.2026**
(21) Application number: 22869064.0
(22) Date of filing: 05.09.2022
(51) Int. Cl.: G06F 30/13

(54) **METHOD AND APPARATUS FOR CONFIGURATION OF AIR-CONDITIONING MACHINE ROOM, AND ELECTRONIC DEVICE AND READABLE STORAGE MEDIUM**
VERFAHREN UND VORRICHTUNG ZUR KONFIGURATION EINES KLIMATISIERUNGSMASCHINENRAUMS SOWIE ELEKTRONISCHE VORRICHTUNG UND LESBARES SPEICHERMEDIUM
PROCÉDÉ ET APPAREIL DE CONFIGURATION D'UNE SALLE DE MACHINE DE CLIMATISATION, ET DISPOSITIF ÉLECTRONIQUE ET SUPPORT DE STOCKAGE LISIBLE

(30) Priority: 17.09.2021 CN 202111092475
(43) Date of publication of application: 28.02.2024
(73) Proprietor: Shanghai Kong Intelligent Building Co., Ltd, Shanghai 200080 (CN); GD Midea Heating & Ventilating Equipment Co., Ltd., Foshan, Guangdong 528311 (CN)
(72) Inventor: QIU, Yide, Shanghai 200080 (CN); LIANG, Rui, Shanghai 200080 (CN); LUO, Liang, Shanghai 200080 (CN); LI, Yuanyang, Shanghai 200080 (CN); LIANG, Qin, Shanghai 200080 (CN); SHI, Zhongsheng, Shanghai 200080 (CN); CHENG, Kuang, Shanghai 200080 (CN)
(74) Representative: Whitlock, Holly Elizabeth Ann
(86) International application number: PCT/CN2022/117092
(87) International publication number: WO 2023/040693

(56) References cited:
- CN-A- 107 328 028
- CN-A- 107 606 730
- CN-A- 109 595 747
- CN-A- 109 595 747
- CN-A- 113 742 833
- CN-U- 209 459 146
- JP-B2- 6 812 283
- US-A1- 2010 023 167
- US-A1- 2010 329 903

## Description

### TECHNICAL FIELD

The present disclosure relates to the field of air-conditioning technology, and in particular, to a setting method for an air-conditioning machine room, a device, electronic equipment, and a readable storage medium.

### BACKGROUND

In related technologies, the design of a machine room system of central air-conditioning has complicated and chaotic layout of pipelines, which may lead to problems such as crowded locations and pipeline crossings, which then increases the space requirement of the machine room and the pipeline resistance of the system, increases the energy consumption of the machine room system, and cannot intuitively reflect the spatial location relationships of the machine room. The designed machine room has poor adaptability.

Document CN 109 595 747 A discloses an energy consumption simulation method and device for an air-conditioning system. US 2010//329903 A1 relates to a compressed air energy storage system utilizing two-phase flow to facilitate heat exchange.

### SUMMARY

The present disclosure provides a setting method for an air-conditioning machine room, a device, electronic equipment and a readable storage medium, to at least ensure that the spatial positional relationship of the machine room can be intuitively reflected during the layout of the machine room. The designed machine room has strong adaptability and is convenient to use.

In accordance with some embodiments of the present disclosure, a setting method for an air-conditioning machine room is provided. The air-conditioning machine room may include, a chiller unit, a water pump and a valve member. The method may include steps of: determining a specification of the chiller unit based on a cooling load of a building, where, the specification of the chiller unit includes, an inlet and outlet specification and a pipe diameter; determining a specification of the water pump based on a preset system water flow; determining a valve member, where a specification of the valve member is matched with the pipe diameter; and plotting the chiller unit, the water pump and valve member on a design layout, and connecting the chiller unit, the water pump and the valve member, where, the chiller unit, the water pump and the valve member are scaled according to the specifications.

In accordance with some embodiments of the present disclosure, a setting device for an air-conditioning machine room is provided. The air-conditioning machine room may include a chiller unit, a water pump, and a valve member. The setting device may include: a chiller unit specification determination module which is configured to determine a specification of the chiller unit based on a preset flow rate of an air-conditioning water pipe, where the specification of the chiller unit includes an inlet and outlet specification and a pipe diameters; a water pump specification determination module which is configured to determine a specification of the water pump based on a preset system water flow; a valve member specification determination module which is configured to determine the valve member whose specification matches the pipe diameter; and an equipment plotting connection module which is configured to plot the chiller unit, the water pump and the valve member on a design layout, and connect the chiller unit, the water pump and the valve member, where, the chiller unit, the water pump and the valve member are scaled according to the specifications.

In accordance with some embodiments of the present disclosure, a piece of electronic equipment is provided. The electronic equipment may include a processor and a memory. The memory stores a computer-executable instruction that is executable by the processor. The processor, when executing the computer-executable instruction, is configured to implement the above-mentioned setting method for the air-conditioning machine room.

In accordance with some embodiments of the present disclosure, a computer-readable storage medium is provided, in which a computer-executable instruction is stored. The computer-executable instruction, when invoked and executed by a processor, causes the processor to implement the above-mentioned setting method for the air-conditioning machine room.

Other features and advantages of the present disclosure will be set forth in the subsequent description, or some of the features and advantages may be inferred or unambiguously determined from the description, or may be learned by practicing the above-mentioned techniques of the present disclosure.

In order to make the above-mentioned objectives, features and advantages of the present disclosure more obvious and comprehensible, preferred embodiments are given below and described in detail with reference to the accompanying drawings.

### DESCRIPTION OF THE DRAWINGS

In order to explain the technical solutions in the specific embodiments of the present disclosure or related technologies more clearly, the drawings that need to be used in the description of the specific embodiments or related technologies will be briefly introduced below. Obviously, the drawings in the following description are some embodiments of the present disclosure, those of ordinary skill in the art can also obtain other drawings based on these drawings without exerting creative efforts.
FIG. 1 is a flow chart of a setting method for an air-conditioning machine room according to some embodiments of the present disclosure;
FIG. 2 is a flow chart of another setting method for an air-conditioning machine room provided by some embodiments of the present disclosure;
FIG. 3 is a schematic diagram of a check valve provided by some embodiments of the present disclosure;
FIG. 4 is a schematic diagram of a rubber soft connection provided by some embodiments of the present disclosure;
FIG. 5 is a schematic diagram of a right-angle filter provided by some embodiments of the present disclosure;
FIG. 6A and FIG. 6B show respectively a cross-sectional view and a top view of an arrangement of a water pump and a chiller unit where a freezing pipe and a cooling pipe enter and exit from different sides according to some embodiments of the present disclosure;
FIG. 7A and FIG. 7B show respectively a cross-sectional view and a top view of an arrangement of the water pump and the chiller unit where the freezing pipe and the cooling pipe enter and exit on the same side according to some embodiments of the present disclosure;
FIG. 8 is a schematic structural diagram of a setting device for an air-conditioning machine room according to some embodiments of the present disclosure; and
FIG. 9 is a schematic structural diagram of a piece of electronic equipment provided by some embodiments of the present disclosure.

### Listing of reference numerals

31 - valve body; 32 - valve flap; 33 - valve cover; 81- chiller unit specification determination module; 82 - water pump specification determination module; 83 - valve member specification determination module; 84 - equipment plotting connection module; 100 - memory; 101 - processor; 102 - bus; and 103 - communication interface.

### DETAILED DESCRIPTION OF THE EMBODIMENTS

In order to make the purpose, technical solutions and advantages of the embodiments of the present disclosure much clearer, the technical solutions of the present disclosure will be clearly and completely described below in conjunction with the drawings. Obviously, the described embodiments are some embodiments of the present disclosure, not all embodiments of the present disclosure. Based on the embodiments in this disclosure, all other embodiments obtained by those of ordinary skill in the art without exerting creative efforts shall fall within the protection scope of this disclosure.

At present, in the related technologies, the design of the machine room system of central air-conditioning has complicated and chaotic layout of pipelines, which may lead to the problems of crowded locations and pipeline crossings, which then increases the space requirements of the machine room and the pipeline resistance of the system, increases the energy consumption of the machine room system, and cannot intuitively reflect the spatial location relationships of the machine room. The designed machine room has poor adaptability and is difficult to use.

On basis of this, embodiments of the present disclosure provide a setting method for an air-conditioning machine room, a device, electronic equipment, and a readable storage medium. Particularly, the present disclosure relates to a standard layout type of an efficient machine room, which enables a convenient and quick layout of the machine room, and has a compact space structure, while reducing the pipeline resistance of the system and improving the overall energy efficiency of the system.

A setting method for an air-conditioning machine room provided according to embodiments of the present disclosure will be described in detail below with reference to the accompanying drawings.

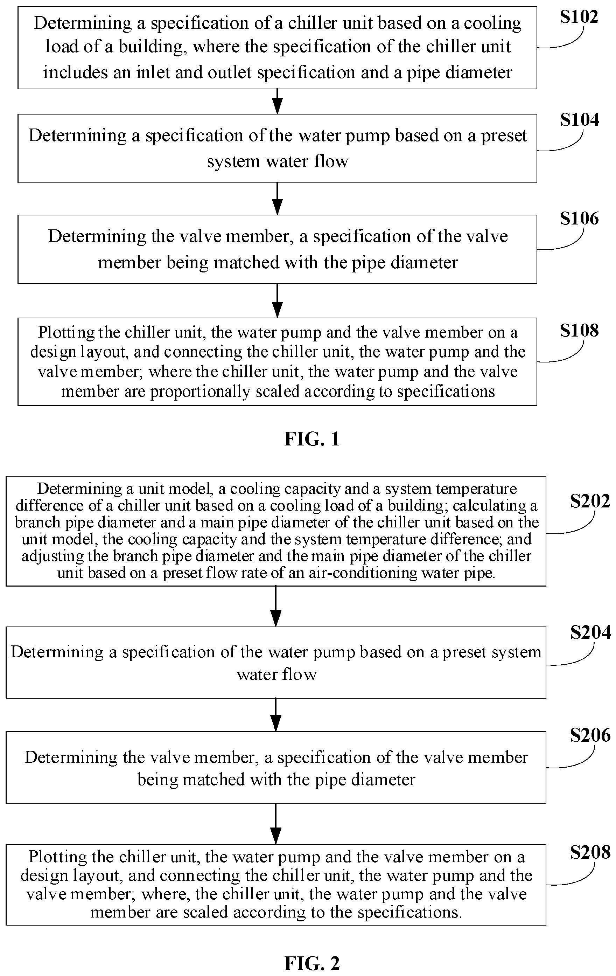

An embodiment of the present disclosure provides a setting method for an air-conditioning machine room. The air-conditioning machine room may include, a chiller unit, a water pump and a valve member. Referring to the flow chart of the setting method for the air-conditioning machine room shown in FIG. 1, the setting method for the air-conditioning machine room may include the following steps, S102, S104, S106 and S108.

In step S102, a specification of the chiller unit is determined based on a cooling load of a building, where the specification of the chiller unit includes an inlet and outlet specification and a pipe diameter.

In this embodiment, the cooling load of the building may be understood as a cooling capacity required by the building containing the air-conditioning machine room. The machine room in this embodiment may be a machine room equipped with a central air-conditioning system, where the air-conditioning machine room may include the chiller unit, the water pump, and the valve member; the water pump may include a chilled water pump and a cooling water pump; and the valve member may include a rubber soft connection, a variable diameter, a swing check valve, a right angle filter, a butterfly valve, a pressure gauge, a drain valve, a heat meter, etc.

In addition, the number and model of the equipment and valve member in the air-conditioning machine room are not limited in this embodiment. For example, multiple chiller units may be arranged in the air-conditioning machine room, and the models of the chiller units may be different.

During a determination of the specification of the chiller unit in the machine room, firstly, a unit model, a cooling capacity, a system temperature difference and other parameters of the chiller unit are obtained. These parameters may be obtained from the nameplate and instructions of the chiller unit. Based on these parameters, the inlet and outlet specification and the pipe diameter of the chiller unit may be calculated, as the specification of the chiller unit. And then, an appropriate chiller unit pipelines may be selected based on the above calculation results.

In step S104, a specification of the water pump is obtained based on a preset system water flow.

The water pump in the air-conditioning machine room may include a chilled water pump and a cooling water pump. Specifications of these two types of water pumps are determined in a similar way and will be explained here. First of all, the air-conditioning machine room in this embodiment may include the above two types of water pumps, or may include only one type of water pump, or even neither type of water pumps. If it is determined in this step that the above two types of water pumps are not included, then it may be determined that the specification of the water pump is empty.

During a determination of the specification of the water pump in the machine room, firstly, a water flow of a machine room system is obtained, and then a water pump of appropriate model and specification is obtained based on the water flow. If the water flow is small, then a water pump having a small pump body and a small footprint may be selected, such as a vertical single stage pump; if the water flow is large, then a water pump having a large pump body and a large footprint may be selected such as a horizontal double suction pump.

In step S106, a valve member is determined, where a specification of the valve member is matched with the pipe diameter.

After the specifications of the chiller unit and water pump in the machine room are determined, the valve member for the chiller unit may be determined. The specification of the valve member for the chiller unit need to match the pipe diameter of the chiller unit. Particularly, the specification of the valve member for the chiller unit and the pipe diameter of the chiller unit may be matched by looking up a size specification table of various valve members. For example, Taking the check valve as an example, a nominal diameter of the check valve (that is, the specification of the check valve) that matches the pipe diameter of each connection pipe of the chiller unit may be looked up in a standard specification size table of the check valve. Based on a look-up result, an appropriate check valve can be selected.

In step S108, the chiller unit, the water pump and the valve member are plotted on a design layout, and the chiller unit, the water pump and valve member are connected; where the chiller unit, the water pump and the valve member are scaled according to the specifications.

After the specifications of the chiller unit, the water pump and the valve member are determined, the chiller unit, the water pump and the valve member may be plotted on the design layout. The design layout may be plotted using different software, such as an AutoCAD (Autodesk Computer Aided Design) software. In this step, the chiller unit, the water pump and the valve member are scaled according to the specifications when plotting, which may ensure that the spatial position relationship of the machine room can be intuitively reflected when the air-conditioning machine room is laid out.

After the plotting of the chiller unit, water pump and valve member is completed, the chiller unit, water pump and valve member need to be connected. In this step, the chiller unit and the water pump may be connected in a direct connection manner to improve the efficiency of the water pump.

In the setting method for the air-conditioning machine room provided by the embodiment of the present disclosure, the chiller unit, the water pump and the valve member are scaled for plotting, and are connected after the specifications of the chiller unit, water pump and valve member are determined. Thus, it is ensured the spatial location relationship of the machine room can be intuitively reflected during the layout of the air-conditioning machine room. The designed air-conditioning machine room has strong adaptability and is convenient to use.

Another setting method for an air-conditioning machine room according to an embodiment of the present disclosure will be described in detail below with reference to the accompanying drawings.

The embodiment of the present disclosure provides another setting method for an air-conditioning machine room. This method is implemented on the basis of the above embodiment. The air-conditioning machine room in this embodiment may include a chiller unit, a cooling water pump, a chilled water pump, a rubber soft connection, a variable diameter, a swing check valve, a right-angle filter, a butterfly valve, a pressure gauge, a drain valve, a heat meter and other equipment and a valve member.

Based on the above description, as shown in FIG. 2 is a flow chart of another setting method for an air-conditioning machine room. The setting method for the air-conditioning machine room in this embodiment may include the following steps S202, S204, S206 and S208.

In step S202, a unit model, a cooling capacity and a system temperature difference of the chiller unit are determined based on a cooling load of a building; a branch pipe diameter and a main pipe diameter of the chiller unit are calculated based on the unit model, the cooling capacity and the system temperature difference; and the branch pipe diameter and the main pipe diameter of the chiller unit are adjusted based on a preset flow rate of an air-conditioning water pipe.

Where, a correspondence relationship between the cooling load of the building and the cooling capacity of the chiller unit may be stored in advance. After the cooling load of the building is determined, the cooling capacity of the chiller unit can be determined based on the above correspondence relationship. In addition, a correspondence relationship between the cooling load of the building and the unit model of the chiller unit may also be stored in advance. After the cooling load of the building is determined, the unit model of the chiller unit can be determined based on the above correspondence relationship, and then the cooling capacity of the chiller unit may be determined by using other methods.

For example, the unit model of the chiller unit may be obtained from the nameplate of the chiller unit, and the cooling capacity of the chiller unit may also be obtained from the nameplate of the chiller unit. If the chiller unit's nameplate does not indicate the cooling capacity of the chiller unit, then a water tank volume and a performance coefficient of the chiller unit may be obtained from the nameplate first. The performance coefficient is generally a COP (energy efficiency ratio, Coefficient of Performance). Then, a specified time corresponding to a rise of the chiller unit to a specified temperature is measured, and the cooling capacity of the chiller unit is calculated through the following formula, the water tank volume × the specified temperature ÷ the specified time ÷ the performance coefficient.

The system temperature difference of the chiller unit may be understood as a difference in cooling water temperature, that is, the difference between a cooling water inlet temperature and a cooling water outlet temperature. Also, the system temperature difference may generally be read from the nameplate or instructions of the chiller unit.

The branch pipe diameter and the main pipe diameter of the chiller unit may be calculated based on the unit model, the cooling capacity and the system temperature difference. Among them, the branch pipe diameter and the main pipe diameter obtained through calculation need to meet an economic flow rate requirement of the air-conditioning water pipe. If the branch pipe diameter and the main pipe diameter obtained through calculation fail to meet the economic flow rate requirement of the air-conditioning water pipe, then the branch pipe diameter and the main pipe diameter of the chiller unit need to be adjusted according to the flow rate requirement of the air-conditioning water pipe.

In step S204, a specification of the water pump is determined based on a preset system water flow.

Water pumps of different specifications have different characteristics. Among them, a factor of the system water flow should be considered when determining the specification of the water pump. For example, in the case that the preset system water flow is smaller than a preset flow threshold, then the water pump is determined to be a vertical single-stage pump; and in the case that the system water flow is greater than or equal to the preset flow threshold, then the water pump is determined to be a horizontal double-suction pump.

Taking the preset flow threshold of 300m³ /h as an example, if the system water flow is <300m ³ /h, then a vertical single-stage pipeline pump may be selected, which has the characteristics of a small pump body and a small footprint; if the system water flow is ≥300m³ /h, then a horizontal double-suction pump may be selected, this type of water pump may be suitable for a machine room systems having a large water flow and has a high efficiency.

In step S206, the valve member is determined, where a specification of the valve member is matched with the pipe diameter.

The valve member whose specification matching the pipe diameter may be determined according to the pipe diameter of the chiller unit determined in the above step. Among them, correspondence relationships between different types of valve member and the pipe diameter of the chiller unit may be different. The following steps may be performed, including: determining a type of valve member and a correspondence relationship between this type of valve member and the pipe diameter of the chiller unit; and determining the valve member that matches the pipe diameter based on the correspondence relationship.

Where, the valve member may include, a check valve, a rubber soft connection and a right-angle filter. To reduce a pipeline resistance of the machine room system, a low-resistance pipeline valve may be used; and correspondingly a swing check valve may be selected as the check valve, which can reduce the energy consumption of the machine room system.

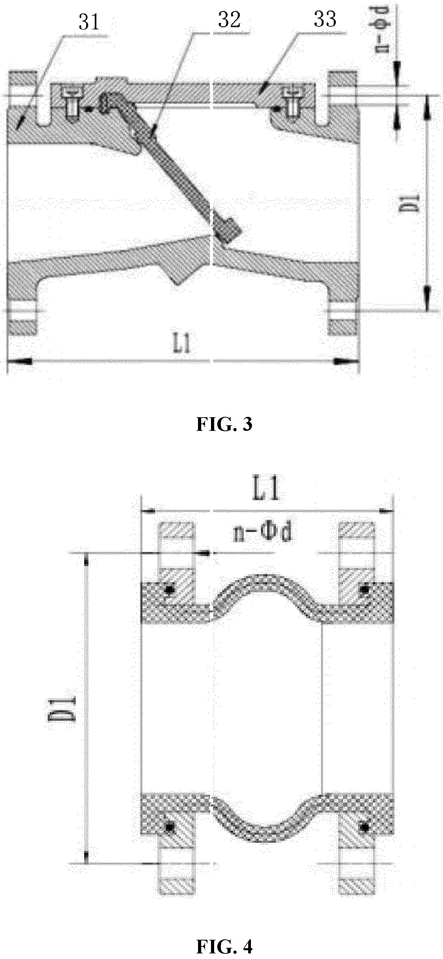

Taking the check valve as an example, with reference to the schematic diagram of a check valve shown in FIG. 3 and Table 1. FIG. 1 shows a standard size specification table of the check valve. The check valve may include a valve body 31, a valve flap 32 and a valve cover 33. As shown in FIG. 3 and Table 1, the specification of the check valve includes a nominal diameter, L1, D1 and N-Φd. During a selection of check valve, the check valve having a suitable nominal diameter may be selected based on the pipe diameter of the chiller unit calculated in the previous step, and it is determined whether the parameters such as L1, D1 and N-Φ d of the check valve of this nominal diameter are appropriate.

**Table 1**

| Standard Size Specification Sable of Check Valve | | | | | |
|---|---|---|---|---|---|
| Nominal Diameter | L1 | D1 | | N-Φd | |
| | | 1.0MPa | 1.6MPa | 1.0MPa | 1.6MPa |
| 50 | 203 | 125 | 125 | 4-18 | 4-18 |
| 65 | 216 | 145 | 145 | 4-18 | 4-18 |
| 80 | 241 | 160 | 160 | 8-18 | 8-18 |
| 100 | 292 | 180 | 180 | 8-18 | 8-18 |
| 125 | 330 | 210 | 210 | 8-18 | 8-18 |
| 150 | 356 | 240 | 240 | 8-22 | 8-22 |
| 200 | 495 | 295 | 295 | 8-22 | 12-22 |
| 250 | 622 | 350 | 355 | 12-22 | 12-22 |
| 300 | 698 | 400 | 410 | 12-22 | 12-26 |
| 350 | 787 | 460 | 470 | 16-22 | 16-26 |
| 400 | 914 | 515 | 525 | 16-26 | 16-30 |
| 450 | 978 | 565 | 585 | 20-26 | 20-30 |
| 500 | 978 | 620 | 650 | 20-26 | 20-33 |
| 600 | 1295 | 725 | 770 | 20-30 | 20-36 |

Then, taking the rubber soft connection as an example, with reference to the schematic diagram of a rubber soft connection shown in FIG. 4 and Table 2. Table 2 is a standard size specification table of the rubber soft connection (also referred to as a rubber hose). As shown in FIG. 4 and Table 2, the specification of rubber soft connection includes a nominal diameter, L1, an axial displacement (including an elongation and a compression), a lateral displacement and an offset angle. During a selection of rubber soft connection, the rubber soft connection having a suitable nominal diameter may be selected according to the pipe diameter of the chiller unit calculated in the previous step, and it is determined whether the parameters such as L1, the axial displacement (including the elongation and the compression), the lateral displacement and the offset angle of the rubber soft connection of this nominal diameter are appropriate.

**Table 2**

| Standard Size Specification Table of Rubber Soft Connection | | | | | |
|---|---|---|---|---|---|
| Nominal Diameter | L1 | Axial Displacement | | Lateral Displacement | Offset Angle |
| | | Elongation | Compression | | |
| 80 | 135 | 8 | 15 | 12 | 15° |
| 100 | 150 | 10 | 19 | 13 | 15° |
| 125 | 165 | 12 | 19 | 13 | 15° |
| 150 | 180 | 12 | 20 | 14 | 15° |
| 200 | 210 | 16 | 25 | 22 | 15° |
| 250 | 230 | 16 | 25 | 22 | 15° |
| 300 | 245 | 16 | 25 | 22 | 15° |
| 350 | 255 | 16 | 25 | 22 | 15° |
| 400 | 255 | 16 | 25 | 22 | 15° |
| 450 | 255 | 16 | 25 | 22 | 15° |
| 500 | 255 | 16 | 25 | 22 | 15° |
| 600 | 260 | 16 | 25 | 22 | 15° |
| 700 | 260 | 16 | 25 | 22 | 15° |
| 800 | 260 | 16 | 25 | 22 | 15° |
| 900 | 260 | 16 | 25 | 22 | 15° |

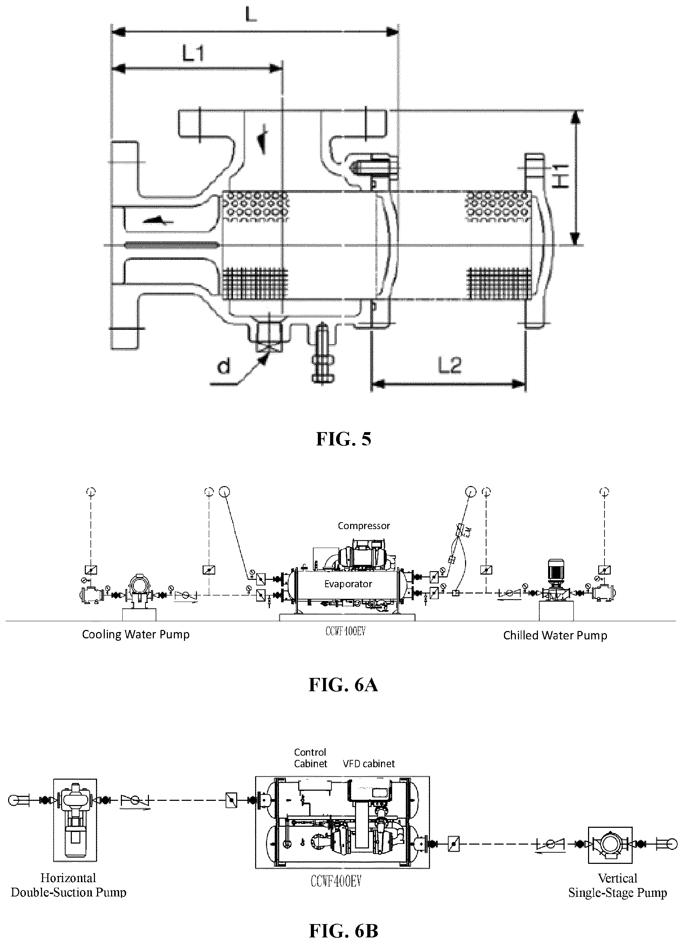

Then, taking the right-angle filter as an example, with reference to the schematic diagram of a right-angle filter shown in FIG. 5 and Table 3. Table 3 is a standard size specification table of the right-angle filter. As shown in FIG. 5 and Table 3, the specification of the right-angle filter includes an inlet, an outlet, L, L1, L2, H1, d and other parameters. During a selection of right-angle filter, the right-angle filter having a suitable specification may be obtained based on the pipe diameter of the chiller unit calculated in the previous steps.

**Table 3**

| | | | | | | | | | | | | |
|---|---|---|---|---|---|---|---|---|---|---|---|---|
| Inlet | DN 50 | DN 65 | DN 80 | DN 100 | DN 150 | DN 200 | DN 250 | DN 300 | DN 350 | DN 400 | DN 500 | DN 600 |
| Outlet | DN 50 | DN 65 | DN 80 | DN 100 | DN 150 | DN 200 | DN 250 | DN 300 | DN 350 | DN 400 | DN 500 | DN 600 |
| L | 211 | 239 | 268 | 311 | 399 | 496 | 585 | 686 | 751 | 819 | 950 | 1060 |
| L1 | 130 | 146 | 163 | 195 | 256 | 301 | 354 | 425 | 464 | 491 | 550 | 550 |
| L2 | 103 | 126 | 147 | 170 | 228 | 285 | 360 | 430 | 482 | 525 | 695 | 800 |
| H1 | 102 | 111 | 128 | 152 | 203 | 251 | 291 | 341 | 379 | 402 | 460 | 550 |
| d | NPT 1/2"-14 | | | NPT 3/4"-14 | | NPT 1"-11.5 | | | | | | |

In step S208, the chiller unit, the water pump and the valve member are plotted on a design layout, and the chiller unit, the water pump and the valve member are connected; where, the chiller unit, the water pump and the valve member are scaled according to the specifications.

Based on data in the above specification table, drawing blocks may be created for all valve members in CAD according to a drawing scale, and can be adapted to various types of chiller units and pipe diameters.

The water pump in the embodiment of the present disclosure may include a chilled water pump and a cooling water pump. The chilled water pump is coupled to the chiller unit through a freezing pipe; the cooling water pump is coupled to the chiller unit through a cooling pipe. During a connection of the chiller unit, water pump and valve member, the following two manners are provided for connecting the freezing pipe and the cooling pipe: the freezing pipe and the cooling pipe are arranged on the same side of the chiller unit; or alternatively, the freezing pipe and the cooling pipe are arranged on opposite sides of the chiller unit.

Where, the arrangement of freezing pipe and cooling pipe entering and exiting on the same side or from different sides may be selected according to an area of the air-conditioning machine room. For example, the area of the air-conditioning machine room is determined; if the area is greater than a preset area threshold, then the freezing pipe and cooling pipe are arranged on opposite sides of the chiller unit; and if the area is smaller than or equal to the preset area threshold, the freezing pipe and the cooling pipe are arranged on the same side of the chiller unit.

Where, the arrangement of the freezing pipe and cooling pipe entering and exiting from different sides may be suitable for a layout of larger air-conditioning machine room. In the case that the area of the air-conditioning machine room is too small and the length cannot meet the requirements of entering and exiting from different sides, the arrangement of the freezing pipe and cooling pipe entering and exiting on the same side may be selected.

Referring to FIG. 6A and FIG. 6B, which show respectively a cross-sectional view and a top view of an arrangement of the water pump and the chiller unit where the freezing pipe and the cooling pipe enter and exit from different sides for. In the figures, CCWF400EV is the chiller unit, the cooling water pump is provided on the left side of the chiller unit, and the chilled water pump is provided on the right side of the chiller unit. The cooling water pump adopts a horizontal double-suction pump, and the chilled water pump adopts a vertical pipeline pump. The freezing pipe is arranged on the right side of the chiller unit, and the cooling pipe is arranged on the left side of the chiller unit. The freezing pipe and the cooling pipe enter and exit from different sides.

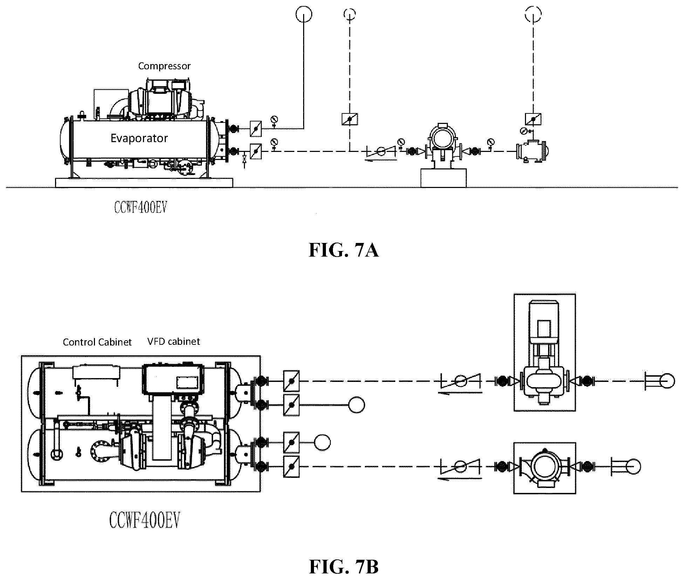

Referring to FIG. 7A and FIG. 7B, which show respectively a cross-sectional view and a top view of an arrangement of the water pump and the chiller unit where the freezing pipe and the cooling pipe enter and exit on the same side. In the figures, the CCWF400EV is the chiller unit, the cooling water pump and the cooling water pump are provided on the left side of the chiller unit. The freezing pipe and the cooling pipe are both provided on the right side of the chiller unit, and the freezing pipe and the cooling pipe enter and exit on the same side.

In addition, the chiller unit and water pump may be connected in a direct connection manner. The direct connection can improve the efficiency of the water pump, while also reducing right-angle elbows in the pipeline and reducing the system resistance.

In summary, the above methods provided by the embodiments of the present disclosure provide a standard layout type for an efficient machine room, which can be directly arranged in a relevant machine room drawing using standardized layout blocks, and this layout type has a minimum usable area while ensuring the normal construction and connection of the units, and the pipelines between equipment connections may also be lengthened to meet the layout of a larger machine room.

In this method, the chiller unit and the water pump are directly connected, which can improve the efficiency of the water pump, while also reducing the right-angle elbows in the pipeline and reducing the system resistance. In the machine room system, a swing check valve in low force, a right-angle filter and other low-resistance pipeline valve are used, which effectively reduces the energy consumption of the system. Meanwhile, the specifications and dimensions of each equipment and valve in the machine room system are scaled in proportional for plotting to ensure that the machine room layout can intuitively reflect the spatial position relationship of the machine room; and this standard layout takes into account a piping space of the connection pipe and the backup pump, which is highly applicable and convenient to use.

A setting device for an air-conditioning machine room provided according to the embodiments of the present disclosure will be described in detail below with reference to the accompanying drawings.

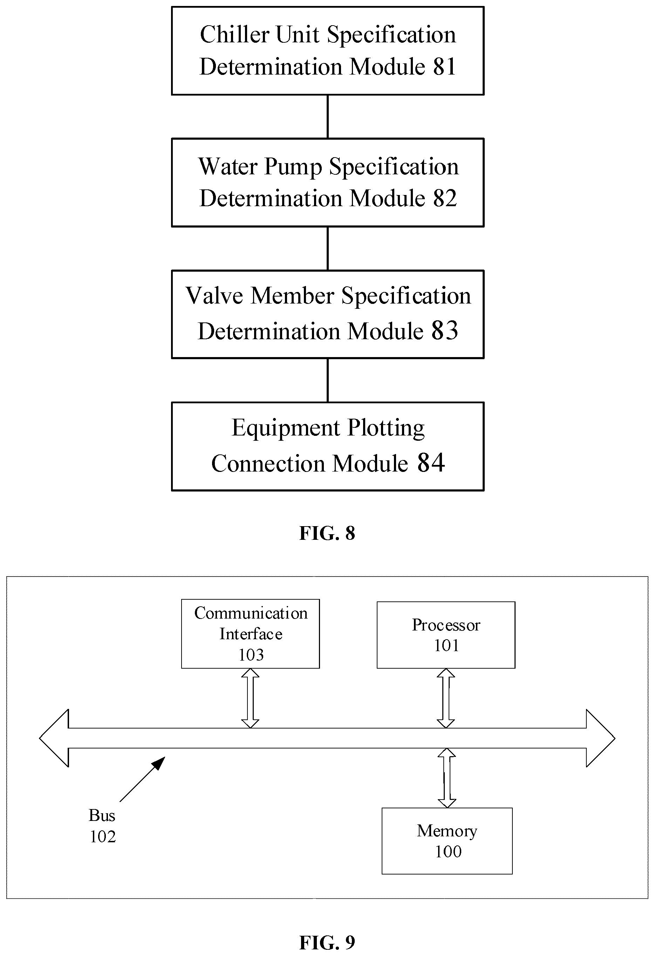

Corresponding to the above method embodiment, an embodiment of the present disclosure provides a setting device for an air-conditioning machine room. The air-conditioning machine room may include: a chiller unit, a water pump and a valve member. Referring to FIG. 8 which shows a schematic structural diagram of a setting device for an air-conditioning machine room, the setting devices of the air-conditioning machine room may include: a chiller unit specification determination module 81, a water pump specification determination module 82, a valve member specification determination module 83 and an equipment plotting connection module 84.

The chiller unit specification determination module 81 is configured to determine a specification of the chiller unit based on a cooling load of a building; wherein the specification of the chiller unit includes an inlet and outlet specification and a pipe diameter.

The water pump specification determination module 82 is configured to determine a specification of the water pump based on a preset system water flow.

The valve member specification determination module 83 is configured to determine a valve member whose specification matching the pipe diameter.

The equipment plotting connection module 84 is configured to plot the chiller unit, the water pump and the valve member on the design layout, and connect the chiller unit, the water pump and the valve member; where, the chiller unit, the water pump and the valve member are scaled according to the specifications.

In the setting device for the air-conditioning machine room provided by the embodiment of the present disclosure, the chiller unit, the water pump, and the valve member are scaled for plotting, and are connected after the specifications of the chiller unit, the water pump, and the valve member are determined. Thus, it is ensured that the spatial location relationship of the machine room can be intuitively reflected during the layout of the air-conditioning machine room. The designed air-conditioning machine room has strong adaptability and is convenient to use.

The pipe diameter of the above-mentioned takeover may include a branch pipe diameter and a main pipe diameter. The above-mentioned chiller unit specification determination module may be configured to: determine a unit model, a cooling capacity and a system temperature difference of the chiller unit based on the cooling load of the building; calculate the branch pipe diameter and the main pipe diameter of the chiller unit based on the unit model, the cooling capacity and the system temperature difference; and adjust the branch pipe diameter and the main pipe diameter of the chiller unit based on a preset flow rate of an air-conditioning water pipe.

The above-mentioned water pump specification determination module may be configured to: determine that the water pump is a vertical single-stage pump if the preset system water flow is smaller than a preset flow threshold; and determining that the water pump is a horizontal double-suction pump if the preset system water flow is greater than or equal to the preset flow threshold.

The above-mentioned valve member specification determination module may be configured to: determine a type of valve member and a correspondence relationship between the type of valve member and the pipe diameter of the chiller unit; and determine the valve member that matches the pipe diameter based on the correspondence relationship.

The valve member may include a check valve, a rubber soft connection, and a right-angle filter. The above-mentioned valve member may be a low-resistance pipeline valve. The check valve may be a swing check valve.

The above-mentioned equipment plotting connection module may be configured to connect the chiller unit and the water pump in a direct connection manner.

The above-mentioned water pump may include a chilled water pump and a cooling water pump. The chilled water pump is coupled to the chiller unit through a freezing pipe; the cooling water pump is coupled to the chiller unit through a cooling pipe. The above-mentioned equipment plotting connection module may be configured to, arrange the freezing pipe and the cooling pipe on the same side of the chiller unit; or alternatively, arrange the freezing pipe and cooling pipe on opposite sides of the chiller unit.

The above-mentioned equipment plotting connection module may be configured to determine an area of the air-conditioning machine room, and arrange the freezing pipe and the cooling pipe on opposite sides of the chiller unit if the area is greater than a preset area threshold. The above-mentioned equipment plotting connection module may be configured to arrange the freezing pipe and the cooling pipe on the same side of the chiller unit if the area is smaller than or equal to the preset area threshold.

It can be clearly understood by persons skilled in the art that, for the convenience and simplicity of description, the specific working process of the above-described setting device for the air-conditioning machine room may refer to the corresponding process of the setting method for the air-conditioning machine room in the aforementioned embodiment, which will not be repeated here.

Electronic equipment provided according to the embodiments of the present disclosure will be described in detail below with reference to the accompanying drawings.

An embodiment of the present disclosure also provides a piece of electronic equipment, which may be configured to perform the above-mentioned setting method for the air-conditioning machine room. With reference to FIG. 9, a schematic structural diagram of a piece of electronic equipment is shown. The electronic equipment may include a memory 100 and a processor 101, where the memory 100 is configured to store one or more computer instructions, and the one or more computer instructions, when executed by the processor 101, enable the above-mentioned setting method for the air-conditioning machine room to be implemented.

The electronic equipment shown in FIG. 9 may also include a bus 102 and a communication interface 103. The processor 101, the communication interface 103 and the memory 100 are connected through the bus 102.

Among them, the memory 100 may include a high-speed random-access memory (RAM, Random Access Memory), and may also include a non-volatile memory (non-volatile memory), such as at least one disk memory. The communication connection between the system network element and at least one other network element is realized through at least one communication interface 103 (which may be wired or wireless), and the Internet, wide area network, local network, metropolitan area network, etc. may be used. The bus 102 may be an ISA bus, a PCI bus, an EISA bus, etc. The bus may be divided into an address bus, a data bus, a control bus, etc. For ease of presentation, only one bidirectional arrow is shown in FIG. 9, but it does not mean that there is only one bus or one type of bus.

The processor 101 may be an integrated circuit chip having signal processing capabilities. During the implementation process, each step of the above method may be completed by instructions in the form of hardware integrated logic circuits or software in the processor 101. The above-mentioned processor 101 may be a general-purpose processor, including a central processing unit (Central Processing Unit, CPU for short), a network processor (Network Processor, NP for short), etc. The processor may also be a digital signal processor (Digital Signal Processor, DSP for short), an application specific integrated circuit (Application Specific Integrated Circuit, ASIC for short), a field-programmable gate array (Field-Programmable Gate Array, FPGA for short) or other programmable logic devices, a discrete gate or a transistor logic device, and a discrete hardware component. Each method, step and logical block diagram disclosed in the embodiments of the present disclosure can be implemented or executed. A general-purpose processor may be a microprocessor or the processor may be any conventional processor, etc. The steps of the method disclosed in conjunction with the embodiments of the present disclosure may be directly implemented by a hardware decoding processor, or executed by a combination of hardware and software modules in the decoding processor. The software module may be inserted in a random-access memory, a flash memory, a read-only memory, a programmable read-only memory or an electrically erasable programmable memory, a register and other mature storage media in this field. The storage medium is stored in the memory 100. The processor 101 reads the information in the memory 100 and implement the steps of the method in the foregoing embodiment in combination with the hardware.

Embodiments of the present disclosure also provide a computer-readable storage medium. The computer-readable storage medium may store a computer-executable instructions. When the computer-executable instruction is invoked and executed by the processor, the computer-executable instruction causes the processor to implement the above setting method for an air-conditioning machine room, for specific implementation, references may be made to the method embodiments, which will not be described again here.

A computer program product for the setting method for the air-conditioning machine room, the device and the electronic equipment is provided by an embodiment of the present disclosure. The computer program product may include a computer-readable storage medium storing a program code. The instructions included in the program code may be used to execute the method in the preceding embodiments, for specific implementation, reference may be made to the method embodiments, which will not be described again here.

It can be clearly understood for persons skilled in the art that, for the convenience and simplicity of description, the specific working process of the system and/or device described above may refer to the corresponding process in the foregoing method embodiment, which will not be described again here.

In addition, in the description of the embodiments of the present disclosure, unless otherwise clearly stated and limited, the terms "installation", "connection" and "coupling" should be understood in a broad sense. For example, it may be a fixed connection or a detachable connection, or it may be integrally connected; it may be a mechanical connection or an electrical connection; it may be a direct connection or an indirect connection through an intermediate medium; and it may be an internal connection between two components. For those of ordinary skill in the art, the specific meanings of the above terms in this disclosure may be understood on a case-by-case basis.

If functions are implemented in the form of software functional units and sold or used as independent products, then these functions may be stored in a computer-readable storage medium. Based on this understanding, the technical solution of the present disclosure is essentially or the part that contributes to the relevant technology or the part of the technical solution may be embodied in the form of a software product. The computer software product is stored in a storage medium and includes several instructions that are configured to cause a computer device (which may be a personal computer, a server, or a network device, etc.) to execute all or part of the steps of the methods described in various embodiments of the present disclosure. The aforementioned storage medium includes: a U disk, a mobile hard disk, a read-only memory (ROM, Read-Only Memory), a random-access memory (RAM, Random Access Memory), a magnetic disk or an optical disk and other media that can store a program code.

In the description of the present disclosure, it should be noted that the orientation or positional relationship indicated by terms, such as "center", "upper", "lower", "left", "right", "vertical", "horizontal", "inner", "outer", etc. is based on the orientation or positional relationship shown in the drawings, which is only for the convenience of describing the present disclosure and simplifying the description, and does not intended to indicate or imply that the device or element referred to must have a specific orientation or be constructed or operated in a specific orientation, and therefore should not be construed as limitations on the present disclosure. Furthermore, the terms "first", "second" and "third" are used for descriptive purposes only and should not be construed as indicating or implying relative importance.

### Industrial applicability

The present disclosure provides a setting method for an air-conditioning machine room, a device, electronic equipment and a readable storage medium. Among them, the method includes steps of: determining a specification of a chiller unit based on a cooling load of a building; where the specification of the chiller unit include an inlet and outlet specification and a pipe diameter; determining a specification of a water pump based on a preset system water flow; determining a valve member, where a specification of the valve member is matched with the pipe diameter; and plotting the chiller unit, the water pump and the valve member on a design layout, and connecting the chiller unit, the water pump and the valve member; where, the chiller unit, the water pump and the valve member are scaled according to the specifications. In this method, after the specifications of the chiller unit, the water pump and the valve member are determined, the chiller unit, the water pump and the valve member are scaled for plotting, and are connected, this ensures that the spatial location relationship of the machine room can be intuitively reflected when the air-conditioning machine room is laid out. The designed air-conditioning machine room is highly adaptable and convenient to use.

In addition, it can be understood that the setting method for the air-conditioning machine room, the device, the electronic equipment and the readable storage medium of the present disclosure are reproducible and can be applied in various applications. For example, the setting method for the air-conditioning machine room, the device, the electronic equipment and the readable storage medium of the present disclosure may be applied to the field of air-conditioning technology, etc.

## Claims

1. A setting method for an air-conditioning machine room, the air-conditioning machine room comprises a chiller unit, a water pump and a valve member; the setting method comprising:
determining (S101) a specification of the chiller unit based on a cooling load of a building, wherein the specification of the chiller unit comprises an inlet and outlet specification and a pipe diameter;
determining (S104, S204) a specification of the water pump based on a preset system water flow;
determining (S106, S206) the valve member, a specification of the valve member being matched with the pipe diameter; and
plotting (S108, S208) the chiller unit, the water pump and the valve member on a design layout, and connecting the chiller unit, the water pump and the valve member; wherein the chiller unit, the water pump and the valve member are proportionally scaled according to specifications;
wherein, the water pump comprises a chilled water pump and a cooling water pump, the chilled water pump is coupled to the chiller unit through a freezing pipe; the cooling water pump is coupled to the chiller unit through a cooling pipe; said connecting the chiller unit, the water pump and the valve member comprises:
arranging the freezing pipe and the cooling pipe on a same side of the chiller unit; or
alternatively, arranging the freezing pipe and the cooling pipe on opposite sides of the chiller unit;
wherein, said arranging the freezing pipe and the cooling pipe on the opposite sides of the chiller unit comprises: determining an area of the air-conditioning machine room; and arranging the freezing pipe and the cooling pipe on the opposite sides of the chiller unit in the case that the area is greater than a preset area threshold; and
said arranging the freezing pipe and the cooling pipe on the same side of the chiller unit comprises: arranging the freezing pipe and the cooling pipe on the same side of the chiller unit in the case that the area is less than or equal to the preset area threshold.

2. The setting method according to claim 1, wherein, the pipe diameter of the pipe comprises a branch pipe diameter and a main pipe diameter; said determining the specification of the chiller unit based on the cooling load of the building comprises:
determining (S202) a unit model, a cooling capacity and a system temperature difference of the chiller unit based on the cooling load of the building;
calculating the branch pipe diameter and the main pipe diameter of the chiller unit based on the unit model, the cooling capacity and the system temperature difference; and
adjusting the branch pipe diameter and the main pipe diameter of the chiller unit based on a preset flow rate of an air-conditioning water pipe.

3. The setting method according to claim 1 or 2, wherein, said determining (S104, S204) the specification of the water pump based on the preset system water flow comprises:
determining that the water pump is a vertical single-stage pump in the case that the preset system water flow is smaller than a preset flow threshold; and
determining that the water pump is a horizontal double-suction pump in the case that the preset system water flow is greater than or equal to the preset flow threshold.

4. The setting method according to any one of claims 1 to 3, wherein, said determining (S106, S206) the valve member, a specification of the valve member being matched with the pipe diameter comprises:
determining a type of the valve member and a correspondence relationship between the type of valve member and the pipe diameter of the chiller unit; and
determining the valve member matching the pipe diameter based on the correspondence relationship.

5. The setting method according to any one of claims 1 to 4, wherein, the valve member comprises a check valve, a rubber soft connection and a right-angle filter.

6. The setting method according to claim 5, wherein the valve member is a low-resistance pipeline valve; and the check valve is a swing check valve.

7. The setting method according to any one of claims 1 to 6, wherein, said connecting the chiller unit, the water pump and the valve member comprises:
connecting the chiller unit with the water pump in a direct connection manner.

8. A setting device for an air-conditioning machine room, the air-conditioning machine room comprising a chiller unit, a water pump and a valve member; the setting device comprising:
a chiller unit specification determination module (81), configured to determine (S102) a specification of the chiller unit based on a preset flow rate of an air-conditioning water pipe;
wherein the specification of the chiller unit comprises an inlet and outlet specification and a pipe diameter;
a water pump specification determination module (82), configured to determine (S104, S204) a specification of the water pump based on a preset system water flow;
a valve member specification determination module (83), configured to determine (S106, S206) the valve member, a specification of the valve member being matched with the pipe diameter; and
an equipment plotting connection module (84), configured to plot (S108, 208) the chiller unit, the water pump and the valve member on a design layout, and connect the chiller unit, the water pump and the valve member; wherein, the chiller unit, the water pump and the valve member are proportionally scaled according to specifications;
wherein, the water pump comprises a chilled water pump and a cooling water pump, the chilled water pump is coupled to the chiller unit through a freezing pipe, and the cooling water pump is coupled to the chiller unit through a cooling pipe; the equipment plotting connection module is configured to: arrange the freezing pipe and the cooling pipe on a same side of the chiller unit; or alternatively, arrange the freezing pipe and the cooling pipe on opposite side of the chiller unit;
wherein, the equipment plotting connection module is configured to, determine an area of the air-conditioning machine room; arrange the freezing pipe and the cooling pipe on the opposite sides of the chiller unit in the case that the area is greater than a preset area threshold; and the equipment plotting connection module is configured to, arrange the freezing pipe and the cooling pipe on the same side of the chiller unit in the case that the area is smaller than or equal to the area threshold.

9. The setting device according to claim 8, configured to perform the method to any one of claims 2 to 7.

10. A computer-readable storage medium, wherein, a computer-executable instruction is stored in the computer-readable storage medium, the computer-executable instruction, when invoked and executed by a processor (101), causes the processor (101) to implement the setting method for the air-conditioning machine room according to any one of claims 1 to 7.

## Patentansprüche

1. Einstellverfahren für einen Klimatechnikraum, der eine Kühleinheit, eine Wasserpumpe und ein Ventilelement umfasst, wobei das Einstellverfahren Folgendes umfasst:
Bestimmen (S101) einer Spezifikation für die Kühleinheit auf der Grundlage einer Kühllast eines Gebäudes, wobei die Spezifikation für die Kühleinheit eine Einlass- und
Auslassspezifikation und einen Rohrdurchmesser umfasst,
Bestimmen (S104, S204) einer Spezifikation für die Wasserpumpe auf der Grundlage eines voreingestellten Systemwasserdurchflusses,
Bestimmen (S106, S206) des Ventilelements, bei dem eine Spezifikation für das Ventilelement auf den Rohrdurchmesser abgestimmt wird, und
grafisches Darstellen (S108, S208) der Kühleinheit, der Wasserpumpe und des Ventilelements in einem Bestückungsplan und Verbinden der Kühleinheit, der Wasserpumpe und des Ventilelements, wobei die Kühleinheit, die Wasserpumpe und das Ventilelement Spezifikationen entsprechend proportional skaliert werden, wobei die Wasserpumpe eine Tiefkühlwasserpumpe und eine Kühlwasserpumpe umfasst, die Tiefkühlwasserpumpe über ein Gefrierrohr an die Kühleinheit angeschlossen ist, die Kühlwasserpumpe über ein Kühlrohr an die Kühleinheit angeschlossen ist, wobei das Verbinden der Kühleinheit, der Wasserpumpe und des Ventilelements Folgendes umfasst:
Anordnen des Gefrierrohrs und des Kühlrohrs auf einer gleichen Seite der Kühleinheit oder alternativ dazu Anordnen des Gefrierrohrs und des Kühlrohrs auf gegenüberliegenden Seiten der Kühleinheit,
wobei das Anordnen des Gefrierrohrs und des Kühlrohrs auf gegenüberliegenden Seiten der Kühleinheit Folgendes umfasst: Bestimmen einer Fläche des Klimatechnikraums und Anordnen des Gefrierrohrs und des Kühlrohrs auf den gegenüberliegenden Seiten der Kühleinheit, wenn die Fläche größer ist als ein voreingestellter Flächenschwellwert, und
das Anordnen des Gefrierrohrs und des Kühlrohrs auf der gleichen Seite der Kühleinheit Folgendes umfasst: Anordnen des Gefrierrohrs und des Kühlrohrs auf der gleichen Seite der Kühleinheit, wenn die Fläche höchstens dem voreingestellten Flächenschwellwert entspricht.

2. Einstellverfahren nach Anspruch 1, wobei der Rohrdurchmesser des Rohrs einen Abzweigrohrdurchmesser und einen Hauptrohrdurchmesser umfasst, wobei das Bestimmen der Spezifikation für die Kühleinheit auf der Grundlage der Kühllast des Gebäudes Folgendes umfasst:
Bestimmen (S202) eines Modells der Einheit, einer Kühlkapazität und einer Systemtemperaturdifferenz für die Kühleinheit auf der Grundlage der Kühllast des Gebäudes,
Berechnen des Abzweigrohrdurchmessers und des Hauptrohrdurchmessers der Kühleinheit auf der Grundlage des Modells der Einheit, der Kühlkapazität und der Systemtemperaturdifferenz und
Anpassen des Abzweigrohrdurchmessers und des Hauptrohrdurchmessers der Kühleinheit auf der Grundlage einer voreingestellten Durchflussrate eines Klimatisierungswasserrohrs.

3. Einstellverfahren nach Anspruch 1 oder 2, wobei das Bestimmen (S104, S204) der Spezifikation für die Wasserpumpe auf der Grundlage des voreingestellten Systemwasserdurchflusses Folgendes umfasst:
Bestimmen, dass es sich bei der Wasserpumpe um eine vertikale, einstufige Pumpe handelt,
wenn der voreingestellte Systemwasserdurchfluss unter einem voreingestellten Durchflussschwellwert liegt, und
Bestimmen, dass es sich bei der Wasserpumpe um eine horizontale Pumpe mit zwei Ansaugöffnungen handelt, wenn der voreingestellte Systemwasserdurchfluss mindestens dem voreingestellten Durchflussschwellwert entspricht.

4. Einstellverfahren nach einem der Ansprüche 1 bis 3, wobei das Bestimmen (S106, S206) des Ventilelements, bei dem eine Spezifikation für das Ventilelement auf den Rohrdurchmesser abgestimmt wird, Folgendes umfasst:
Bestimmen eines Typs des Ventilelements und eines Übereinstimmungsverhältnisses zwischen dem Typ des Ventilelements und dem Rohrdurchmesser der Kühleinheit und
Bestimmen des zum Rohrdurchmesser passenden Ventilelements auf der Grundlage des Übereinstimmungsverhältnisses.

5. Einstellverfahren nach einem der Ansprüche 1 bis 4, wobei das Ventilelement ein Rückschlagventil, eine elastische Gummiverbindung und einen Winkelfilter umfasst.

6. Einstellverfahren nach Anspruch 5, wobei es sich bei dem Ventilelement um ein Leitungsventil mit geringem Widerstand und bei dem Rückschlagventil um eine Rückschlagklappe handelt.

7. Einstellverfahren nach einem der Ansprüche 1 bis 6, wobei das Verbinden der Kühleinheit, der Wasserpumpe und des Ventilelements Folgendes umfasst:
direktes Verbinden der Kühleinheit mit der Wasserpumpe.

8. Einstellvorrichtung für einen Klimatechnikraum, der eine Kühleinheit, eine Wasserpumpe und ein Ventilelement umfasst, wobei die Einstellvorrichtung Folgendes umfasst:
ein Kühleinheitspezifikationsbestimmungsmodul (81), das so konfiguriert ist, dass es auf der Grundlage einer voreingestellten Durchflussrate eines Klimatisierungswasserrohrs eine Spezifikation für die Kühleinheit bestimmt (S102), wobei die Spezifikation für die Kühleinheit eine Einlass- und Auslassspezifikation und einen Rohrdurchmesser umfasst,
ein Wasserpumpenspezifikationsbestimmungsmodul (82), das so konfiguriert ist, dass es auf der Grundlage eines voreingestellten Systemwasserdurchflusses eine Spezifikation für die Wasserpumpe bestimmt (S104, S204),
ein Ventilelementspezifikationsbestimmungsmodul (83), das so konfiguriert ist, dass es das Ventilelement bestimmt (S106, S206), wobei eine Spezifikation für das Ventilelement auf den Rohrdurchmesser abgestimmt ist, und
ein Modul (84) für das grafische Darstellen und Verbinden von Anlagenteilen, das so konfiguriert ist, dass es die Kühleinheit, die Wasserpumpe und das Ventilelement in einem Bestückungsplan grafisch darstellt (S108, 208) und die Kühleinheit, die Wasserpumpe und das Ventilelement verbindet, wobei die Kühleinheit, die Wasserpumpe und das Ventilelement Spezifikationen entsprechend proportional skaliert sind,
wobei die Wasserpumpe eine Tiefkühlwasserpumpe und eine Kühlwasserpumpe umfasst, die Tiefkühlwasserpumpe über ein Gefrierrohr an die Kühleinheit und die Kühlwasserpumpe über ein Kühlrohr an die Kühleinheit angeschlossen ist, wobei das Modul für das grafische Darstellen und Verbinden von Anlagenteilen so konfiguriert ist, dass es: das Gefrierrohr und das Kühlrohr auf einer gleichen Seite der Kühleinheit oder alternativ dazu das Gefrierrohr und das Kühlrohr auf gegenüberliegenden Seiten der Kühleinheit anordnet,
wobei das Modul für das grafische Darstellen und Verbinden von Anlagenteilen so konfiguriert ist, dass es eine Fläche des Klimatechnikraums bestimmt, das Gefrierrohr und das Kühlrohr auf den gegenüberliegenden Seiten der Kühleinheit anordnet, wenn die Fläche größer ist als ein voreingestellter Flächenschwellwert, und so konfiguriert ist, dass es das Gefrierrohr und das Kühlrohr auf der gleichen Seite der Kühleinheit anordnet, wenn die Fläche höchstens dem Flächenschwellwert entspricht.

9. Einstellvorrichtung nach Anspruch 8, die so konfiguriert ist, dass sie das Verfahren nach einem der Ansprüche 2 bis 7 durchführt.

10. Computerlesbares Speichermedium, wobei eine per Computer ausführbare Anweisung auf dem computerlesbaren Speichermedium gespeichert ist, die, wenn sie von einem Prozessor (101) aufgerufen und ausgeführt wird, den Prozessor (101) dazu veranlasst, das Einstellverfahren für den Klimatechnikraum nach einem der Ansprüche 1 bis 7 zu implementieren.

## Revendications

1. Procédé de réglage pour une salle des machines de climatisation, la salle des machines de climatisation comporte une unité de refroidissement, une pompe à eau et un élément formant soupape ; le procédé de réglage comportant les étapes consistant à :
déterminer (S101) une spécification de l'unité de refroidissement en fonction d'une charge de refroidissement d'un bâtiment, dans lequel la spécification de l'unité de refroidissement comporte une spécification d'entrée et de sortie et un diamètre de tuyau ;
déterminer (S104, S204) une spécification de la pompe à eau en fonction d'un débit d'eau prédéfini du système ;
déterminer (S106, S206) l'élément formant soupape, une spécification de l'élément formant soupape correspondant au diamètre de tuyau ; et
tracer (S108, S208) l'unité de refroidissement, la pompe à eau et l'élément formant soupape sur un plan de conception, et raccorder l'unité de refroidissement, la pompe à eau et l'élément formant soupape ; dans lequel l'unité de refroidissement, la pompe à eau et l'élément formant soupape sont proportionnellement mis à l'échelle en fonction des spécifications ;
dans lequel la pompe à eau comporte une pompe à eau réfrigérée et une pompe à eau de refroidissement, la pompe à eau réfrigérée est raccordée à l'unité de refroidissement au moyen d'un tuyau de congélation ; la pompe à eau de refroidissement est raccordée à l'unité de refroidissement au moyen d'un tuyau de refroidissement ; ladite étape consistant à raccorder l'unité de refroidissement, la pompe à eau et l'élément formant soupape comporte les étapes consistant à :
agencer le tuyau de congélation et le tuyau de refroidissement sur un même côté de l'unité de refroidissement ; ou
en variante, agencer le tuyau de congélation et le tuyau de refroidissement sur des côtés opposés de l'unité de refroidissement ;
dans lequel ladite étape consistant à agencer le tuyau de congélation et le tuyau de refroidissement sur les côtés opposés de l'unité de refroidissement comporte les étapes consistant à : déterminer une superficie de la salle des machines de climatisation ; et agencer le tuyau de congélation et le tuyau de refroidissement sur les côtés opposés de l'unité de refroidissement dans le cas de figure où la superficie est supérieure à un seuil prédéfini de superficie ; et
ladite étape consistant à agencer le tuyau de congélation et le tuyau de refroidissement sur le même côté de l'unité de refroidissement comporte l'étape consistant à : agencer le tuyau de congélation et le tuyau de refroidissement sur le même côté de l'unité de refroidissement dans le cas de figure où la superficie est inférieure ou égale au seuil prédéfini de superficie.

2. Procédé de réglage selon la revendication 1, dans lequel le diamètre de tuyau du tuyau comporte un diamètre de tuyau de dérivation et un diamètre de tuyau principal ; ladite étape consistant à déterminer la spécification de l'unité de refroidissement en fonction de la charge de refroidissement du bâtiment comporte les étapes consistant à :
déterminer (S202) un modèle d'unité, une capacité de refroidissement et une différence de température du système de l'unité de refroidissement en fonction de la charge de refroidissement du bâtiment ;
calculer le diamètre de tuyau de dérivation et le diamètre de tuyau principal de l'unité de refroidissement en fonction du modèle de l'unité, de la capacité de refroidissement et de la différence de température du système ; et
ajuster le diamètre de tuyau de dérivation et le diamètre de tuyau principal de l'unité de refroidissement en fonction d'un débit prédéfini d'un tuyau d'eau de climatisation.

3. Procédé de réglage selon la revendication 1 ou la revendication 2, dans lequel ladite étape consistant à déterminer (S104, S204) la spécification de la pompe à eau en fonction du débit d'eau prédéfini du système comporte les étapes consistant à :
déterminer comme quoi la pompe à eau est une pompe verticale à un étage dans le cas de figure où le débit d'eau prédéfini du système est inférieur à un seuil prédéfini de débit ; et
déterminer comme quoi la pompe à eau est une pompe à double aspiration horizontale dans le cas de figure où le débit d'eau prédéfini du système est supérieur ou égal au seuil prédéfini de débit.

4. Procédé de réglage selon l'une quelconque des revendications 1 à 3, dans lequel ladite étape consistant à déterminer (S106, S206) l'élément formant soupape, une spécification de l'élément formant soupape correspondant au diamètre de tuyau, comporte les étapes consistant à :
déterminer un type de l'élément formant soupape et une relation de correspondance entre le type d'élément formant soupape et le diamètre de tuyau de l'unité de refroidissement ; et
déterminer l'élément formant soupape correspondant au diamètre de tuyau en fonction de la relation de correspondance.

5. Procédé de réglage selon l'une quelconque des revendications 1 à 4, dans lequel l'élément formant soupape comporte un clapet de non-retour, un raccord souple en caoutchouc et un filtre à angle droit.

6. Procédé de réglage selon la revendication 5, dans lequel l'élément formant soupape est une soupape de canalisation à faible résistance ; et le clapet de non-retour est un clapet de non-retour pivotant.

7. Procédé de réglage selon l'une quelconque des revendications 1 à 6, dans lequel ladite étape consistant à raccorder l'unité de refroidissement, la pompe à eau et l'élément formant soupape comporte l'étape consistant à :
raccorder l'unité de refroidissement à la pompe à eau par raccordement direct.

8. Dispositif de réglage pour une salle des machines de climatisation, la salle des machines de climatisation comportant une unité de refroidissement, une pompe à eau et un élément formant soupape ; le dispositif de réglage comportant :
un module de détermination de spécification d'unité de refroidissement (81), configuré pour déterminer (S102) une spécification de l'unité de refroidissement en fonction d'un débit prédéfini d'un tuyau d'eau de climatisation ; dans lequel la spécification de l'unité de refroidissement comporte une spécification d'entrée et de sortie et un diamètre de tuyau ;
un module de détermination de spécification de pompe à eau (82), configuré pour déterminer (S104, S204) une spécification de la pompe à eau en fonction d'un débit d'eau prédéfini du système ;
un module de détermination (83) de spécification d'élément formant soupape, configuré pour déterminer (S106, S206) l'élément formant soupape, une spécification de l'élément formant soupape correspondant au diamètre de tuyau ; et
un module de raccordement de traçage d'équipement (84), configuré pour tracer (S108, 208) l'unité de refroidissement, la pompe à eau et l'élément formant soupape sur un plan de conception, et raccorder l'unité de refroidissement, la pompe à eau et l'élément formant soupape ; dans lequel l'unité de refroidissement, la pompe à eau et l'élément formant soupape sont proportionnellement mis à l'échelle en fonction des spécifications ;
dans lequel la pompe à eau comporte une pompe à eau réfrigérée et une pompe à eau de refroidissement, la pompe à eau réfrigérée est raccordée à l'unité de refroidissement au moyen d'un tuyau de congélation, et la pompe à eau de refroidissement est raccordée à l'unité de refroidissement au moyen d'un tuyau de refroidissement ; le module de raccordement de traçage d'équipement est configuré pour : agencer le tuyau de congélation et le tuyau de refroidissement sur un même côté de l'unité de refroidissement ; ou en variante, agencer le tuyau de congélation et le tuyau de refroidissement sur des côtés opposés de l'unité de refroidissement ;
dans lequel le module de raccordement de traçage d'équipement est configuré pour déterminer une superficie de la salle des machines de climatisation ; agencer le tuyau de congélation et le tuyau de refroidissement sur les côtés opposés de l'unité de refroidissement dans le cas de figure où la superficie est supérieure à un seuil prédéfini de superficie ; et le module de raccordement de traçage d'équipement est configuré pour agencer le tuyau de congélation et le tuyau de refroidissement sur le même côté de l'unité de refroidissement dans le cas de figure où la superficie est inférieure ou égale au seuil de superficie.

9. Dispositif de réglage selon la revendication 8, configuré pour effectuer le procédé selon l'une quelconque des revendications 2 à 7.

10. Support de stockage lisible par ordinateur, dans lequel une instruction en mesure d'être exécutée par ordinateur est stockée dans le support de stockage lisible par ordinateur, l'instruction en mesure d'être exécutée par ordinateur, quand elle est invoquée et exécutée par un processeur (101), amène le processeur (101) à mettre en œuvre le procédé de réglage pour la salle des machines de climatisation selon l'une quelconque des revendications 1 à 7.
